**Europäisches Patentamt**

**European Patent Office**

**Office européen des brevets**

(19)

(11) Numéro de publication: **0 115 971 B1**

# (12) FASCICULE DE BREVET EUROPEEN

(45) Date de publication du fascicule du brevet: **22.04.87**

(51) Int. Cl.⁴: **A 21 B 5/02,** A 21 B 1/42

(21) Numéro de dépôt: **84400013.3**

(22) Date de dépôt: **04.01.84**

(54) **Machine à préparer des spécialités culinaires en forme de galettes.**

(30) Priorité: **04.02.83 FR 8301987**

(43) Date de publication de la demande:
**15.08.84 Bulletin 84/33**

(45) Mention de la délivrance du brevet:
**22.04.87 Bulletin 87/17**

(84) Etats contractants désignés:
**AT BE CH DE FR GB IT LI LU NL SE**

(56) Documents cités:
**FR - A - 575 077**
**FR - A - 2 425 200**
**GB - A - 1 134 708**

(73) Titulaire: **Pacquet, Denis, 17 bis, Place du Général de Gaulle B.P. No 9, F-59122 Hondschoote (FR)**

(72) Inventeur: **Pacquet, Denis, 17 bis, Place du Général de Gaulle B.P. No 9, F-59122 Hondschoote (FR)**

(74) Mandataire: **Ecrepont, Robert, Cabinet Ecrepont 12 Place Simon Vollant (Porte de Paris), F-59800 Lille (FR)**

## Description

L'invention se rapporte à une machine à préparer des spécialités culinaires en forme de galettes.

Elle trouve plus particulièrement mais non exclusivement application dans la fabrication des galettes faites à partir de produits râpés et par exemple les galettes de pommes de terre.

A ce jour, on connaît (GB-A 1 134 708) une machine à préparer des spécialités culinaires en forme de galettes, laquelle machine comprend principalement un bâti portant plusieurs plaques de cuisson présentant chacune au moins une alvéole et des moyens conduisant successivement ces plaques aux postes que comprend la machine et que sont:

– un poste d'alimentation de l'alvéole en produits nécessaires à la cuisson et/ou entrant dans la composition de la galette à réaliser, puis,
– un poste de cuisson d'une première face de la galette, avec ses moyens de chauffage, puis
– un poste de retournement de la galette, ensuite,
– un poste de cuisson de son autre face, avec également ses moyens de chauffage, et encore,
– un poste d'évacuation de la galette,
ce pourquoi les dites plaques suivent un circuit fermé de forme générale rectangulaire.

Telle que cette machine est conçue, la consommation d'énergie est importante et surtout le guidage des plaques est peu satisfaisant et conduit à des produits d'aspect irrégulier.

Un résultat que l'invention vise à obtenir est une machine du type précité qui remédie à ces inconvénients.

A cet effet, elle a pour objet, une telle machine notamment caractérisée en ce que les trajets suivis par les dites plaques lors de leur passage respectif aux postes de cuisson des deux faces de la galette sont disposés non seulement parallèlement et à faible distance l'un de l'autre mais encore en sens opposés et en ce qu'entre eux la jonction est assurée, à l'avant de la machine par des postes d'évacuation et d'alimentation et à l'arrière de la machine par le poste de retournement et en ce que les plaques présentent toutes sur les bords de leur face inférieure des profils qui, au moins dans les postes de cuisson coopèrent avec des glissières d'appui et de guidage que porte à cet effet le bâti de la machine.

L'invention sera bien comprise à l'aide de la description ci-après faite, à titre d'exemple non limitatif, en regard du dessin ci-annexé qui représente schématiquement:

– fig. 1: le poste d'alimentation de la machine,
– fig. 2: la machine vue de dessus,
– fig. 3: un détail du poste de cuisson,

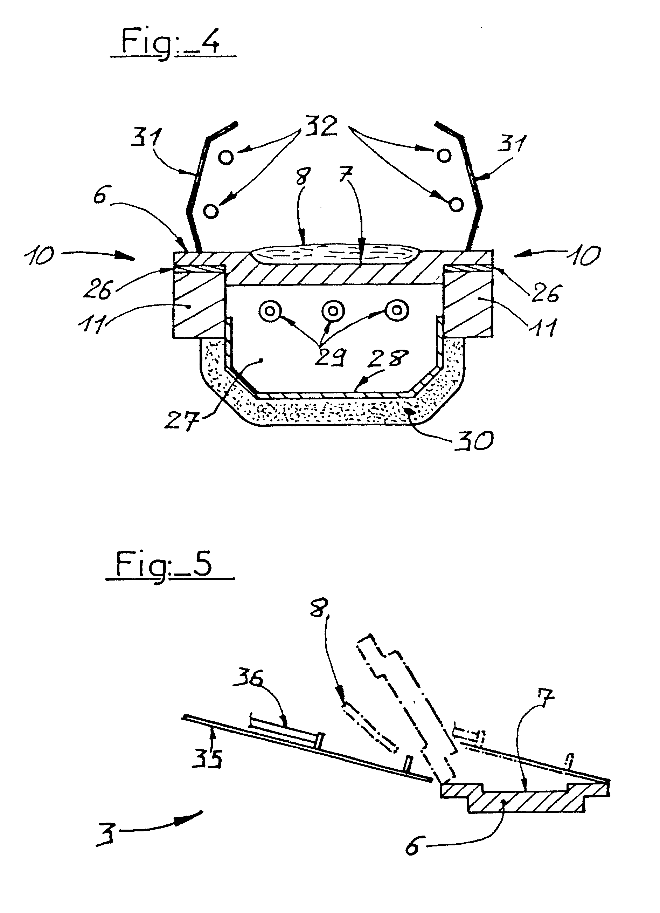

– fig. 4: une vue en coupe transversale du poste de cuisson,
– fig. 5: un détail du poste de retournement.

En se reportant au dessin, on voit que, dans la machine objet de l'invention, chaque galette est réalisée dans une alvéole d'une plaque de cuisson qui, par tout moyen connu, est conduite successivement aux différents postes que comprend la machine, objet de l'invention à savoir:

– un poste 1 d'alimentation en produits nécessaires à la cuisson et/ou entrant dans la composition de la galette à réaliser puis,
– un poste 2 de cuisson d'une première face de la galette puis,
– un poste 3 de retournement de la galette ensuite,
– un poste 4 de cuisson de son autre face et encore,
– un poste 5 d'évacuation de la galette.

Pour assurer une bonne production, la machine comprendra plusieurs plaques 6 voire même plusieurs alvéoles par plaques.

Chaque alvéole 7 a évidemment des formes et dimensions comparables à celles de la galette 8.

Dans le cas où la machine comporte ainsi plusieurs plaques, celles-ci sont réparties en nombres différents entre les différents postes pour tenir compte des temps également différents nécessaires aux travaux à y effectuer.

C'est pourquoi les postes de cuisson 2, 4 qui sont les plus longs dans le temps, le sont aussi en dimension.

Par ailleurs, pour éviter que l'alvéole 7 se vide, ils ont également leur axe longitudinal disposé sensiblement horizontalement.

C'est pour, dans ces conditions, limiter l'encombrement de la machine, qu'ils sont disposés parallèlement et à faible distance l'un de l'autre.

Afin que les plaques soient constamment utilisées, les postes de cuisson 2, 4 sont disposés en sens opposés et, entre eux, la jonction est assurée, à l'avant de la machine par les postes d'évacuation 5 et d'alimentation 1 et à l'arrière de la machine par le poste de retournement 3.

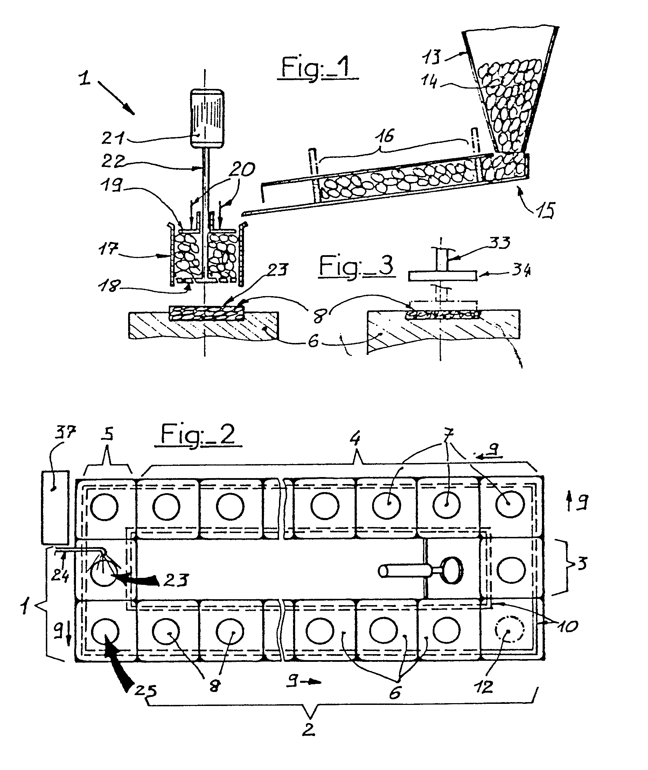

Le circuit fermé 9 que suivent alors les plaque 6 a avantageusement une forme générale rectangulaire qui peut se situer dans un plan quelconque mais, dans un mode préféré de réalisation, les plaques 6 se situent toutes dans un même plan sensiblement horizontal (figure 2). Quoiqu'il en soit, selon une caractéristique de l'invention:

– les trajets suivis par les dites plaques lors de leur passage respectif aux postes (2 et 4) de cuisson des deux faces de la galette (8) sont disposés non seulement parallèlement et à faible distance l'un de l'autre mais encore en sens opposés,
– la jonction est assurée, entre eux, à l'avant de la machine par des postes d'évacuation (5) et d'alimentation (6) et à l'arrière de la machine par le poste de retournement (3) et,
– les plaques 6 présentent toutes sur les bords de leur face inférieure des profils, qui, au moins dans les postes de cuisson 2, 4, coopèrent avec des glissières 10 portées à cet effet par le bâti 11 de la machine et grâce auxquelles les plaques 6 trouvent un bon appui mais également sont guidées dans leur déplacement.

Les dimensions de chacun des côtés du rectangle que forme le parcours 9 sont déterminées de manière à pouvoir recevoir un nombre exact de plaques elles-mêmes rectangulaires et de préférence carrées.

A la mise en place, sur au moins l'un des côtés, au moins l'une des plaques 6 sera supprimée et de préférence la dernière, ce qui permettra de commander l'avance en poussant d'une distance égale au vide 12 ainsi créé, tout d'abord au moins la première et de préférence plusieurs voire toutes les plaques qui, sur ce côté là, sont en amont du vide précité, ce qui y dégagera une place équivalente pour recommencer l'opération et ainsi de suite permettant ainsi une avance pas à pas aux différents postes.

Ces mouvements de poussée pourront par exemple être commandés par des vérins (non représentés) qui, pour chaque côté du parcours seront associés, d'une part, au bâti 11 de la machine et, d'autre part, à une pièce (non représentée) venant en appui sur l'extrémité arrière de la plaque ou rangée de plaques à déplacer.

Comme indiqué plus haut, chaque plaque 6 passe ainsi aux différents postes en commençant par le poste d'alimentation.

Ce poste d'alimentation (figure 1) comprend une trémie 13 de stockage du principal constituant de la galette 8 tel de la pomme de terre 14.

En sortie 15 de cette trémie 13 est raccordé un doseur 16, tel un sas ménagé dans une goulotte de sortie.

En sortie du doseur 16, une certaine quantité du constituant précité 14 tombe dans un réservoir 17 d'alimentation d'une rape 18 de tout type connu.

Selon une caractéristique de l'invention, d'une part, dans le réservoir 17, est prévu un organe d'appui 19 qui, par tout moyen connu, exerce sur le produit 14 à raper une force 20 telle que ce produit 14 reste appliqué sur la rape 18 avec une pression constante et, d'autre part, la rape 18 est commandée par un moteur 21 associé à un moyen de commande par intermittence et pendant des durées déterminées réglables.

Il s'agira par exemple d'une rape rotative 18 réalisant le fond du réservoir et qui sera mue en rotation par un arbre 22 traversant axialement le dit réservoir 17 pour être associé au moteur 21.

L'organe d'appui 19 pourra, quant à lui, être constitué d'un plateau solidaire d'un moyeu par lequel il est enfilé sur un guide, tel l'arbre 22, qui assurera ainsi son guidage en translation.

Les choix du temps de fonctionnement de la rape 18 et de la pression constante précitée, permettent de déterminer avec précision la dose 23 de produit 14 qui est rapée et délivrée pendant chaque période de fonctionnement du moteur 21, laquelle dose 23 correspondra exactement à celle devant chuter dans chaque alvéole.

A la même place ou à un emplacement précédent, cette alvéole 7 aura au préalable, par exemple à l'aide d'une base telle un corps gras 24, été graissée ou huilée en suffisance pour éviter que le produit attache au fond de l'alvéole et pour ensuite cuire la galette 8.

A la même place ou à un emplacement ultérieur du poste d'alimentation 1, le produit rapé pourra recevoir d'autres ingrédients 25, tels par exemple des épices, du fromage et/ou de l'ail et du persil.

Après avoir reçu tous les constituants choisis, la plaque 6 quitte le poste d'alimentation 1 pour gagner le poste de cuisson 2 où, comme indiqué plus haut, des glissières 10 guideront les plaques 6 en translation vers les différentes places qu'elles occuperont successivement entre l'entrée et la sortie du dit poste de cuisson.

De préférence pourvues de garnitures 26 en matériau à faible coefficient de frottement, ces glissières 10 s'étendent parallèlement à l'axe longitudinal du poste de cuisson.

Selon une caractéristique de l'invention, au moins dans ce poste de cuisson, la machine comprend:
- d'une part, entre ces glissières 10, une chambre 27, délimitée à sa partie inférieure, par une paroi rapportée 28, fixée au bâti 11 de la machine et, à sa partie supérieure, par les plaques 6,
- d'autre part, logé dans cette chambre 27, un moyen 29 de chauffage des plaques tel des résistances électriques ou des rampes de brûleurs à gaz.

Le guidage des plaques par les glissières 10 sera suffisamment précis et les bords en vis-à-vis des plaques seront suffisamment dressés pour ne pas créer d'interstice et ce bien entendu dans le but d'éviter des pertes de chaleur.

Dans le même but, la face externe de la paroi 28 délimitant la chambre à sa partie inférieure pourra être recouverte d'une couche 30 de matière isolante telle de la laine de roche.

De plus, pour éviter que les plaques se refroidissent par le dessus, sur au moins l'un des côtés des dites plaques, le bâti de la machine porte un panneau 31 isolant au moins partiellement la zone de cuisson de l'air ambiant.

Ce panneau 31 pourra également être isolé thermiquement sur sa face externe.

Sa face interne et/ou celle de la paroi 28 pourra de plus réaliser un réfecteur de chaleur.

Pour accélérer la cuisson, pourra également être prévu, entre la face interne du panneau 31 et le dessus de la plaque 6, un moyen 32 de chauffage complémentaire par exemple par rayonnement infra-rouge.

Selon une autre caractéristique de l'invention, au moins à l'une des places s'occupent successivement les plaques dans le poste de cuisson, la machine comprend, relié à tout dispositif connu 33 assurant sa commande par intermittence, un organe de pression 34 qui appuiera la galette 8 contre le fond de son alvéole 7 pour en chasser l'huile qui tendra alors à remonter et à venir graisser le dessus de la dite galette pour en favoriser la suite de la cuisson.

Après être sortie du poste 2 de cuisson de la première face de la galette, la plaque 6 est conduite au poste de retournement 3 de la galette.

Selon une caractéristique de l'invention, à ce poste la machine comprend d'une part un moyen (non représenté) associé à la plaque pour en commander alternativement le retournement au moins partiel et, d'autre part, une platine 35 associée à un moyen de commande en translation entre deux positions extrêmes dont une position située sous l'alvéole de la plaque retournée et donc sous le point de chute de la galette qui, de son propre poids, s'échappe de son alvéole lors du retournement du moule et une position située au dessus de l'alvéole de la plaque revenue à sa place normale.

Sur le dessus de la platine 35 est prévue une butée 36, qui de préférence ceinture la galette.

Cette butée est associée à une commande distincte de celle de la platine 35, pour tout d'abord obliger la galette retournée à se déplacer avec la platine 35 vers l'alvéole de la plaque revenue à sa place normale mais qui, au contraire, tant que la galette n'aura pas chuté dans l'alvéole, maintiendra celle-ci au dessus de cette alvéole pendant l'amorce du retour de la platine 35 vers sa position d'attente d'une autre galette où entretemps la butée 36 la rejoindra.

Après ce poste de retournement 3, la plaque parvient au poste 4 de cuisson de la deuxième face de la galette.

Ce poste étant en tous points identique au poste 2 de cuisson de la première face, il n'a besoin d'être ni décrit, ni représenté spécialement, il suffira en effet de se reporter à la description ci-dessus faite du poste 2.

En sortie du poste 4 de cuisson de la deuxième face, la plaque parvient au poste d'évacuation 5 qui comprend, d'une part, un moyen d'extraction de la galette, par exemple semblable au moyen de retournement du poste 3 et, d'autre part, un moyen 37 récupérant les galettes terminées s'échappant de la plaque retournée, tel un transporteur et/ou un réceptacle gardant les galettes à la température désirée.

La plaque ainsi libérée peut alors retourner au poste d'alimentation 1 en vue d'un nouveau cycle.

La machine décrite ci-dessus qui correspond à un mode préféré de réalisation peut évidemment subir de nombreuses modifications sans pour cela sortir du cadre de l'invention.

Par exemple, afin de limiter la largeur de l'ensemble ci-dessus décrit à celle d'une rangée de plaques 6, au lieu d'être tous deux situés dans un même plan horizontal, les deux postes de cuisson 2 et 4 peuvent être disposés l'un au dessus de l'autre sous réserve bien sûr d'adapter en conséquence les autres postes qui assurent le transfert des plaques entre ces postes de cuisson.

Cette disposition, l'un au dessus de l'autre des postes de cuisson, permettra en outre de réaliser sous un faible encombrement une machine comprenant côte à côte plusieurs de ces ensembles multipliant ainsi la production.

## Revendications

1. Machine à préparer des spécialités culinaires en forme de galettes (8), laquelle machine comprend principalement un bâti portant:

– plusieurs plaques de cuisson (6) présentant chacune au moins une alvéole (7), et,
– des moyens conduisants successivement ces plaques aux postes (1 à 5) que comprend la machine et que sont:
– un poste (1) d'alimentation de l'alvéole (7) en produits (14, 24, 25) nécessaires à la cuisson et/ou entrant dans la composition de la galette à réaliser, puis,
– un poste (2) de cuisson d'une première face de la galette, avec ses moyens de chauffage (29), puis
– un poste (3) de retournement de la galette, ensuite,
– un poste (4) de cuisson de son autre face, avec également ses moyens de chauffage, et encore,
– un poste (5) d'évacuation de la galette,

ce pourquoi les dites plaques suivent un circuit fermé (9) de forme générale rectangulaire.

Cette machine étant caractérisée en ce que les trajets suivis aux postes (2 et 4) de cuisson des deux faces de la galette (8) sont disposés non seulement parallèlement et à faible distance l'un de l'autre mais encore en sens opposés et en ce qu'entre eux, la jonction est assurée à l'avant de la machine par des postes d'évacuation (5) et d'alimentation (6) et à l'arrière de la machine par le poste de retournement (3) et en ce que les plaques (6) présentent toutes sur les bords de leur face inférieure des profils qui, au moins dans les postes de cuisson (2 et 4) coopèrent avec des glissières (10) d'appui et de guidage que porte à cet effet le bâti (11) de la machine.

2. Machine selon la revendication 1 caractérisée en ce que le circuit fermé (9) suivi par les plaques a une forme rectangulaire se situant dans un plan sensiblement horizontal, en ce que les dimensions de chacun des côtés du rectangle que forme le parcours (9) sont déterminées de manière à pouvoir recevoir un nombre exact de plaques (6) elles-mêmes rectangulaires et en ce que, sur au moins l'un des côtés de ce rectangle, elle comprend un nombre de plaques inférieur au nombre exact précité de manière à créer un vide (12).

3. Machine selon la revendication 2 caractérisée en ce que les glissières (10) s'étendent parallèlement à l'axe longitudinal des postes de cuisson (2, 4) et en ce que la machine comprend, entre ces glissières (10), une chambre (27) délimitée à sa partie inférieure par une paroi rapportée (28) fixée au bâti de la machine et, à sa partie supérieure, par les plaques (6) et en ce que cette chambre (27) loge le moyen (29) de chauffage des plaques.

4. Machine selon l'une quelconque des revendications 1 à 3 dont le poste d'alimentation (1) comprend des moyens d'alimentation, caractérisée en ce que ces moyens d'alimentation comprennent:

– une trémie (13) de stockage du principal constituant de la galette (8),
– un doseur (16) auquel la trémie est raccordée,
– un réservoir (17) disposé en sortie du doseur,
– une rape (18) alimentée par ce réservoir (17),
– dans le réservoir (17), un organe d'appui (19) qui exerce sur le produit à raper une force (20) telle que ce produit reste appliqué sur la rape (18) avec une pression constante,
– un moteur (21) de commande de la rape (18) et,
– un moyen de commande du moteur par intermittence et pendant une durée déterminée réglable.

5. Machine selon l'une quelconque des revendications 1 à 4 caractérisée en ce que, pour éviter que les plaques (6) se refroidissent par le dessus, sur au moins l'un des côtés des dites plaques, le bâti de la machine porte un panneau isolant (31) au moins partiellement la zone de cuisson de l'air ambiant.

6. Machine selon l'une quelconque des revendications 1 à 5 caractérisée en ce que, au moins à l'une des places qu'occupent successivement les plaques dans le poste de cuisson, la machine comprend, relié à tout dispositif connu (33) assurant sa commande par intermittence, un organe de pression (34) qui appuie la galette (8) contre le fond de son alvéole (7).

## Patentansprüche

1. Maschine zur Herstellung kulinarischer Spezialitäten in Form von Waffeln bzw. Blechkuchen (8), die im wesentlichen einen Rahmen aufweist, der versehen ist mit:

– mehreren Backplatten (6), von denen jede zumindest eine Zelle (7) aufweist und
– Mittel zum aufeinanderfolgenden Führen der Platten zu Stationen (1 bis 5), die die Maschine aufweist und welche sind:
– eine Station (1) zum Speisen der Zelle (7) mit zum Kochen notwendigen Produkten (14, 24, 25) und/oder Zugaben für die Zusammensetzung des herzustellenden Blechkuchens, danach
– eine Station (2) zum Backen einer ersten Seite des Blechkuchens mit dessen Heizmitteln (29), danach
– eine Station (3) zum Umdrehen des Blechkuchens, danach
– eine Station (4) zum Backen seiner anderen Seite mit wiederum seinen Heizmitteln und noch
– eine Station (5) zum Entfernen des Blechkuchens,

wobei die Platten in einem geschlossenen Kreislauf (9) mit einer im allgemeinen rechteckigen Form folgen, dadurch gekennzeichnet, dass die Transportstrecken, die den Stationen (2 und 4) zum Backen der beiden Seiten des Blechkuchens (8) folgen, nicht nur parallel und mit geringem Abstand voneinander angeordnet sind, sondern weisen auch noch den umgekehrten Durchlaufsinn auf, und dass die Verbindung zwischen ihnen am Vorderteil der Maschine durch die Entfernstation (5) und Speisestation (1) und am rückwärtigen Ende der Maschine durch die Wendestation (3) sichergestellt ist und dass die Platten (6) alle an den Rändern ihrer Unterseite Profile aufweisen, die zumindest in den Backstationen (2 und 4) mit Gleitschienen (10) zum Abstützen und zur Führung zusammenwirken, die der Rahmen (11) der Maschine hierfür aufweist.

2. Maschine nach Anspruch 1, dadurch gekennzeichnet, dass der geschlossene Kreislauf (9), dem die Platten folgen, eine rechteckige Form aufweist und in einer im wesentlichen horizontalen Ebene liegt, dass die Abmessungen jeder Seite des Rechtecks, das der geschlossene Kreislauf (9) bildet, dergestalt bestimmt sind, dass eine genaue Anzahl von selbst auch rechteckförmigen Platten (6) aufgenommen werden kann, und dass sie auf zumindest einer der Seiten des Rechtecks eine Anzahl von Platten aufweist, die kleiner als die vorstehend angegebene genaue Anzahl ist, so dass eine Lücke (12) gebildet wird.

3. Maschine nach Anspruch 2, dadurch gekennzeichnet, dass sich die Gleitschienen (10) parallel zur Längsachse der Backstationen (2, 2) erstrecken und dass die Maschine zwischen den Gleitschienen (10) eine Kammer (27) aufweist, die in ihrem unteren Bereich durch eine aufgesetzte Wand (28), die am Rahmen der Maschine festgelegt ist, und die an ihrem oberen Bereich durch die Platten (6) begrenzt ist, und dass diese Kammer (27) die Heizmittel (29) für die Platten aufweist.

4. Maschine nach einem der Ansprüche 1 bis 3, deren Speisestation (1) Speisemittel aufweist, dadurch gekennzeichnet, dass die Speisemittel aufweisen:
– einen Schütttrichter (13) zum Speichern der wesentlichen Bestandteile des Blechkuchens (8),
– einen Dosierer (16), mit dem der Fülltrichter verbunden ist,
– einen Behälter (17), der am Ausgang des Dosierers angeordnet ist,
– eine Reibe (18), die durch diesen Behälter (17) versorgt wird,
– ein Drückorgan (19) in dem Behälter (17), das auf das zu zerreibende Produkt eine Kraft (20) dergestalt ausübt, dass das Produkt an der Reibe (18) mit einem konstanten Druck angedrückt bleibt,
– einen Motor (21) zum Steuern der Reibe (18) und
– ein Steuermittel zum Unterbrechen des Motors während einer bestimmt einstellbaren Dauer.

5. Maschine nach einem der Ansprüche 1 bis 4, dadurch gekennzeichnet, dass zur Vermeidung, dass sich die Platten (6) auf ihrer Oberseite abkühlen, weist der Rahmen der Maschine auf zumindest der einen Seite der Platten ein Isolationsschild (31) zumindest im Bereich der Backzone von der Umgebungsluft auf.

6. Maschine nach einem der Ansprüche 1 bis 5, dadurch gekennzeichnet, dass zumindest an einem der Orte, den die Platten aufeinanderfolgend in der Backstation besetzen, die mit einer bekannten Einrichtung (33) verbunden ist und die intermittierende Steuerung sicherstellt, die Maschine ein Druckorgan (34) aufweist, die den Blechkuchen (8) gegen den Boden seiner Zelle (7) drückt.

## Claims

1. A machine for making culinary specialities (8) having the shape of flat cakes, which comprises principally a structure supporting a plurality of cooking trays (6) each having at least one hollow (7), and means for successively guiding these trays to the stations (1 to 5) which the machine comprises and which are: a station (1) for supplying the hollow (7) with the products (14, 24, 25) necessary for the cooking process and/or forming part of the composition of the cake to be made, then a station (2) for cooking the first side of the cake, with its heating means (29), a station (3) for turning the cake over, a station (4) for cooking its other side, also with heating means, and further a station (5) for ejecting the cake, thus the said trays follow a closed circuit (9) in an overall rectangular shape, characterised in that the paths of movement followed at the stations (2 and 4) for cooking the two sides of the cake (8) are not only disposed parallel to one another and at a short distance from one another, but also in opposite directions, and that the join therebetween is provided at the front of the machine by the eject station (5) and the supply station (1) and at the rear of the machine by the turnover station (3), and that the trays (6) all have on the edges of their lower faces profiles which, at least in the cooking stations (2, 4), co-operate with support and guide slide rails (10) which the structure (11) of the machine supports for this purpose.

2. A machine according to claim 1, characterised in that the closed circuit (9) followed by the trays has a rectangular shape in a substantially horizontal plane, that the dimensions of each of the sides of the rectangle which comprise the circuit (9) are determined so as to be able to receive an exact number of trays (6) which are themselves rectangular and that on at least one side of the rectangle there is a number of trays which is lower than the aforementioned exact number so as to create a gap (12).

3. A machine according claim 2, characterised in that the slide rails (10) extend parallel to the longitudinal axis of the cooking stations (2, 4) and that the machine comprises, between the slide rails (10), a chamber (27) defined at its lower end by an inserted wall (28) secured to the structure of the machine and, in its upper portion, by trays (6), and that this chamber (27) houses the means (29) for heating the trays.

4. A machine according to any one of claims 1 to 3 the feed station (1) of which comprises feed means, characterised in that the feed means comprise a hopper (13) for holding the main ingredient of the cake (8), a dosing device (16) to which the hopper is attached, a reservoir (17) disposed at the exit of the dosing device, a grater (18) supplied by this reservoir, in the reservoir (17) a bearing element (19) which exerts a force (20) on the product to be grated so that the product remains pressed against the grater (18) at constant pressure, a control motor (21) for the grater (18) and means for controlling the motor intermittently and for a present adjustable period.

5. A machine according to any one of claims 1 to 4, characterised in that, in order to prevent the trays (6) from cooling on top, on at least one side of the said trays the structure of the machine · supports a panel (31) insulating at least partially the cooking zone from the surrounding air.

6. A machine according to any of claims 1 to 5, characterised in that at least one of the places occupied successively by the trays in the cooking station, the machine comprises a pressure element (34), connected to any known device providing intermittent control, which presses the cake (8) against the bottom of its hollow (7).

Fig.\_1

Fig.\_3

Fig.\_2

Fig:_4

Fig:_5